# EUROPEAN PATENT SPECIFICATION

(11) **EP 2 112 973 B1**
(45) Date of publication and mention of the grant of the patent: **09.08.2017**
(21) Application number: 08715874.7
(22) Date of filing: 20.02.2008
(51) Int. Cl.: B32B 13/14

(54) **USE OF COMPOSITE MATERIALS FOR DIRECT PRINTING, PRINTED COMPOSITE MATERIALS AND METHOD FOR THEIR MANUFACTURE**
VERWENDUNG VON VERBUNDWERKSTOFFEN ZUM DIREKTEN DRUCKEN, BEDRUCKTE VERBUNDWERKSTOFFE UND VERFAHREN ZUR IHRER HERSTELLUNG
UTILISATION DE MATÉRIAUX COMPOSITES POUR L'IMPRESSION DIRECTE, MATÉRIAUX COMPOSITES IMPRIMÉS ET PROCÉDÉ POUR LEUR FABRICATION

(30) Priority: 21.02.2007 DE 102007008423; 21.02.2007 DE 102007008424; 16.03.2007 DE 102007012651; 18.06.2007 DE 102007028531
(43) Date of publication of application: 04.11.2009
(73) Proprietor: Johns Manville Europe GmbH, 86399 Bobingen (DE)
(72) Inventor: KETZER, Michael, 97903 Collenberg (DE); GLEICH, Klaus Friedrich, Highland Ranch, CO 80126 (US); CHRISTENSEN, Bernd, 97877 Wertheim (DE); JAFFEE, Alan, Wood Country, OH 43402 (US); MIELE, Phil, Highland Ranch, CO 80126 (US); BENNETT, Glenda, Toledo, OH 43614 (US); ECKERT, Bernhard, 97896 Freudenberg-Boxtal (DE); ALBRECHT, Annette, 97877 Wertheim (DE)
(74) Representative: Mai Dörr Besier European Patent Attorneys
(86) International application number: PCT/EP2008/001303
(87) International publication number: WO 2008/101679

(56) References cited:
- EP-A- 1 595 718
- WO-A-03/061964
- AT-B- 362 691
- DE-U1-202004 003 214
- FR-A- 1 456 777
- JP-A- 2000 025 016
- US-A1- 2006 054 265
- US-A1- 2006 234 026

## Description

The invention relates to printed composite materials suitable in particular as materials in interior finishing, for linings, constructions and for the manufacture of furniture and similar products.

Composite materials are increasingly replacing traditional building materials as construction materials and must be adapted for manifold applications. Thus, on the one hand a sufficient mechanical stability is required and on the other hand a good processability and low weight are necessary. There has therefore been no lack of attempts to improve existing composite materials.

Thus, the combining of wood materials, which are manufactured from comminuted wood and the use of binders, with further materials is already known. To this end, the two materials are usually laminated and form a composite material. The selection and combination of the materials can improve the mechanical properties and at the same time a reduction, e.g. of the weight, can be achieved.

During processing the previously described composite materials are often subjected to further finishing steps, e.g., a lacquering or printing. This places high demands regarding smoothness and tolerances on the surfaces to be worked so that the surfaces to be worked must be pre-worked in an expensive manner and often several times in order that a later finish is possible at all.

Composite materials based on wooden materials and non-woven fabrics strengthened by a "B" stage binder are known from WO2006/031522. The base non-woven fabrics are known, e.g., from US-A-5,837,620, US-A-303,207 and US-A-6,331,339.

It is known from WO2006/031522 that further additives can be added to the binder or the non-woven fabric but more detailed data about the later usage and the processing are not given.

US4158713 discloses particle boards comprising a cured thermoset printed sheet secured to one surface of the board. There was therefore the task of finding composite materials that can be subjected to further finishing steps, e.g., lacquering or printing, without the surfaces to be worked having to be pre-worked in an expensive manner and often several times. Furthermore, there is the task of finding composite materials with the previously cited properties that can be finished to the extent possible with known working processes and systems.

The present invention concerns the use of a composite material comprising: a) a carrier, said carrier being selected from the group of wooden materials, papers, cork, cardboards and/or mineral plates, b) at least one textile surface structure laminated on at least one of the two sides of the carrier, which textile surface structure having at least one finally hardened B-stage binder and can be optionally provided with at least one functional material, said textile surface structure being a non-woven fabric, said textile surface being formed from fibers of synthesized polymers, ceramic fibers, mineral fibers or glass fibers, wherein these can also be used in the form of mixtures, c) the side(s) of the composite material equipped with the textile surface structure being not subjected to any mechanical working prior to the printing, for the direct printing of the side of the textile surface structure facing away from the carrier by inkjet, silk screen and/or digital printing. The composite materials in accordance with the invention have a very good surface quality, expressed as thickness variation, on the side(s) equipped with the textile surface structure. The thickness variation of the composite material in accordance with the invention is preferably less than 0.1 mm, preferably less than 0.01 mm.

It is known that composite materials can be printed and/or lacquered but the surface to be worked must first be prepared by suitable measures. Usually, the surfaces are smoothed for this by abrasive measures, e.g., grinding. The composite material in accordance with the invention is helpful here. The surface quality of the side of the carrier, which side is equipped with the textile surface structure, is already so good that a direct workability is given. Thus, the abrasive measures can be eliminated.

A further preparatory measure in the printing or lacquering of composite materials is to provide the surface to be worked with so-called primer layers. Fillers, especially water-soluble fillers are understood to be primer layers or primer materials in the sense of the present invention. In as far as the surfaces to be worked have a low surface quality, relatively thick primer layers or several primer layers are necessary.

It was only possible to print and/or lacquer the surface by these measures (grinding and/or primer coating).

These measures (primer coating) can be entirely or at least partially eliminated with the aid of the composite materials in accordance with the invention. This represents a significant simplification in the printing/lacquering of composite materials, in particular in the case of composite materials comprising a carrier of wooden material.

Depending on the lacquering or printing technique, so-called base coatings are also applied on the side(s) of the composite material to be worked, which sides are equipped with the textile surface structure. These single-coated or multi-coated base coatings form the pressure support and are known in the state of the art. The base coatings can also contain pigments, depending on the area of application.

The carrier used in accordance with a) is selected from the group of wooden materials, papers, cork, cardboards, and/or mineral plates. The wooden materials are plate-shaped or strand-shaped wooden materials manufactured by mixing the different wooden particle forms with natural and/or synthetic binding agents during a hot pressing. The wooden materials used in accordance with the invention preferably comprise plywood or laminated wood, wood-chip material, especially chipboards and OSB (Oriented Strand Boards), wood fiber material, especially porous wood fiber boards, open-diffusion wood fiber boards, hard (high-density) wood fiber boards (HDF) and medium-density wood fiber boards (MDF), and Arboform. Arboform is a thermoplastically processable material of lignin and other wood components.

Moreover, the carriers in accordance with the invention comprise materials of wood fiber materials, cellulose fibers, natural fibers or their mixtures and of a thermoplastic binder, the portion of the binder being more than 15% by weight. The materials are optionally reinforced by glass fibers, basalt fibers or synthetic fibers.

The papers are preferably papers on the basis of natural, synthetic, mineral or ceramic fibers or also of mixtures of these fiber types.

The cardboards are preferably cardboards on the basis of natural and/or synthetic fibers, which also comprise mineral and/or ceramic fibers as well as mixtures of these fiber types.

The mineral plates are preferably commercial mineral cardboard plates with cardboard coating on both sides, gypsum fiber plates, ceramic fiber plates, cement plates or lime plates. The plates can optionally be reinforced with natural and/or synthetic fibers, which can also comprise mineral and/or ceramic fibers. The reinforcement fibers can be present in the form of filaments, monofilaments or as staple fibers.

In addition to the described materials the carrier can also consist of cork. The weight per unit area of the carriers contained in the composite material is a function of the final application and is not subject to any particular limitation.

The textile surface structures used in accordance with step b) are all structures manufactured from fibers and from which a textile surface was produced by means of a surface-forming technology.

The textile surface structures to be provided with the B-stage binder can basically also be used without binders, in particular chemical binders.
However, in order to ensure the required strengths in the further processing of the surface structures binders can also be introduced and/or known needling methods can be used. In addition to the possibility of a mechanical strengthening, e.g., by calendering or needling, in particular the hydrodynamic needling is also mentioned here. Chemical and/or thermoplastic binders are suitable as binders.

However, the textile surface structures to be provided with the B-stage binder are preferably pre-strengthened with a chemical binder. The binders used can be the same or different but must be selected from the group of the binder systems compatible with the B-stage binder. The additional amount of binder is maximally 25 % by weight, preferably 10 % by weight or less; the minimum content is 0.5 % by weight, preferably a minimum of 1 % by weight.

The fiber-forming materials are fibers of synthesized or natural polymers, ceramic fibers, mineral fibers or glass fibers that can also be used in the form of mixtures. Textile surfaces are non-woven fabrics.

The textile surfaces of mineral and ceramic fibers are aluminosilicate fibers, ceramic fibers, dolomite fibers, wollastonite fibers or fibers of vulcanites, preferably basalt fibers, diabase fibers and/or melaphyr fibers, especially basalt fibers. Daibases and melaphyrs are designated combined as paleobasalts and diabase is also often designated as greenstone.

The mineral fiber non-woven fabric can be formed from filaments, that is, infinitely long fibers or of staple fibers. The average length of the staple fibers in the non-woven fabric of mineral fibers used in accordance with the invention is between 5 and 120 mm, preferably 10 to 90 mm. In a further embodiment of the invention the mineral fiber non-woven fabric contains a mixture of endless fibers and staple fibers. The average fiber diameter of the mineral fibers is between 5 and 30 µm, preferably between 8 and 24 µm, especially preferably between 8 and 15 µm. The weight per unit area of the textile surface structure of mineral fibers is between 15 and 500 g/m², preferably 40 and 250 g/m², wherein these data refer to a surface structure without binders. The glass fibers non-woven fabrics are constructed from filaments, that is, infinitely long fibers or of staple fibers. The average length of the staple fibers is between 5 and 120 mm, preferably 10 to 90 mm. In a further embodiment of the invention the glass fiber non-woven fabric contains a mixture of endless fibers and staple fibers.

The average diameter of the glass fibers is between 5 and 30 µm, preferably between 8 and 24 µm, especially preferably between 10 and 21 µm.

In addition to the previously cited diameters even so-called glass microfibers can be used. The preferred average diameter of the glass microfibers is between 0.1 1 and 5 µm. The microfibers forming the textile surface can also be present in mixtures with other fibers, preferably glass fibers. Moreover, a layer-shaped construction of microfibers and glass fibers is also possible.

The weight per unit area of the textile surface structure of glass fibers is between 15 and 500 g/m², preferably 40 and 250 g/m², wherein these data refer to a surface structure without binders.

Suitable glass fibers comprise those manufactured from A- glass, E-glass, S-glass, T-glass or R-glass.

The textile surface can be manufactured according to any known method. For glass non-woven fabrics this is preferably the dry or wet laying method.

Among the textile surfaces of fibers of synthetic polymers, non-woven fabrics, especially so-called spun bonds, that is, spunbonded non-woven fabrics produced by a tangled deposit of melt-spun filaments, are preferred. They consist of endless synthetic fibers of melt-spinnable polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, even those polymers are suited that are spun from solution.

The spunbonded non-woven fabrics preferably consist of melt-spinnable polyesters. In principle, all known types of polyester material suitable for the manufacture of fibers are considered as polyester material. Polyesters containing at least 95 mole % polyethyleneterephthalate (PET), especially those of unmodified PET, are especially preferable.

If the composite materials in accordance with the invention should additionally have a flame-retardant action, it is advantageous if they were spun from polyesters modified in a flame-retardant manner. Such polyesters modified in a flame-retardant manner are known.

The individual titers of the polyester filaments in the spunbonded non-woven fabric are between 1 and 16 dtex, preferably 2 to 10 dtex.

In a further embodiment of the invention the spunbonded non-woven fabric can also be a bonded fiber fabric hardened by melt binder and which contains carrier fibers and melded fibers. The carrier fibers and melded fibers can be derived from any thermoplastic, fiber-forming polymers. Such spunbonded non-woven fabrics hardened by melt binder are described, e.g., in EP-A-0,446,822 and EP-A-0,590,629.

In addition to endless filaments (spunbond method) the textile surface can also be constructed of staple fibers or mixtures of staple fibers and endless filaments. The individual titers of the staple fibers in the non-woven fabric are between 1 and 16 dtex, preferably 2 to 10 dtex. The staple length is 1 to 100 mm, preferably 2 to 500 mm, especially preferably 2 to 30 mm. The textile surface structure can also be constructed of fibers of different materials in order to be able to achieve special properties.

The filaments and/or staple fibers constructing the bonded fiber fabric can have a practically round cross-section or also other forms such as dumbbell-shaped, kidney-shaped, triangular or tri-lobed or multi-lobed cross-sections. Even hollow fibers and bi-component or multi-component fibers can be used. Furthermore, the melded fibers can also be used in the form of bi-component or multi-component fibers.

The fibers forming the textile surface structure can be modified by customary additives, e.g., by antistatic agents such as carbon black.

The weight per unit area of the textile surface structure of fibers of synthetic polymers is between 10 and 500 g/m², preferably 20 and 250 g/m².

In as far as the composite material in accordance with the invention is to be finished by powder lacquering or electrostatically, the composite material to be worked should have a sufficient electrical conductivity. It can be advantageous for this if the carrier used in accordance with a) already contains pigments or particles in order to elevate the electrical conductivity that bring about such an elevation The previously described conductivity can also be present as functional materials in the textile surface structure equipped with B-stage binder. For this, these functional materials can be mixed and applied with the B-stage binder or the textile structure equipped with the B-stage binder is equipped with the functional material. The previously cited materials are usually metallic particles, carbon black or conductive organic resins such as phenol resins or inorganic or organic salts. Such additives already known from DE-A- 3639816. Furthermore, even the salts disclosed in DE-A- 10232874 and EP-A-1659146, especially alkali or alkaline earth salts such as lithium nitrate and sodium nitrate can be used. However, the previously cited materials should be compatible with the other materials.

The textile surface structure used according to b), which is applied at least on one side of the carrier, includes at least one binder in the B-stage state. B-stage binders denotes binders that are only partially strengthened or hardened and can still experience a final hardening, e.g., by thermal post-treatment. Such B-stage binders are described in detail in US-A-5,837,620, US-A-6,303,207 and US-A-6,331,339. The B-stage binders disclosed there are also subject matter of the present description. B-stage binders are preferably binders based on furfuryl alcohol formaldehyde, phenol formaldehyde, melamine formaldehyde, urea formaldehyde and their mixtures. Preferably, aqueous systems are concerned. Further preferred binder systems are formaldehyde-free binders. B-stage binders are distinguished in that they can be subjected to a multistage hardening, that is, they still have a sufficient binding action after the first hardening or after the first hardenings so that they can be used for the further processing.
Such binders are usually hardened after the addition of a catalyst at temperatures of ca. 350°F in one step.
In order to form the B-stage, such binders are optionally hardened after the addition of a catalyst. The amount of hardening catalyst is up to 10% by weight, preferably 1 to 10% by weight (relative to the total binder content). For example, ammonium nitrate as well as organic aromatic acids, e.g., maleic acid and p-toluene sulfonic acid are suitable as hardening catalyst since it allows the B-stage state to be more rapidly reached. In addition to ammonium nitrate, maleic acid and p-toluene sulfonic acid, all materials are suitable as hardening catalyst that have a comparable acidic function. In order to reach the B-stage the textile surface structure impregnated with the binder is dried under the influence of temperature without producing a complete hardening. The necessary process parameters are dependent on the binder system selected.

The lower temperature limit can be influenced by the selection of the duration or by adding more or stronger acidic hardening catalyst.

The application of the B-stage binder onto the textile surface structure designated in b) can take place with the aid of all known methods. In addition to spraying on, impregnating and pressing in, the binder can also be applied by coating or by rotary nozzle heads.

A further preferred method is the application of the B-stage binder by the application of foam. In the application of foam, a binder foam is produced with the aid of a foaming agent in a foam mixer that is applied by suitable coating aggregates onto the non-woven fabric. The application can also take place here by rotary nozzle heads.

In the foam coating of a B-stage-capable binder there are basically no limitations regarding the foaming agent. Preferred foaming agents are ammonium stearates or succinic acid esters added with 1% - 5% by weight in dry mass to the binder. Furthermore, the already described catalysts are mixed in if required. The solids content of the foam is at least 40%, preferably at least 50%.

The process of foam application makes possible an extremely flexible process control and permits the realization of a plurality of different product properties. In addition to the targeted adjustment of the penetration depth of the foam into the textile surface the binder charge and porosity can vary within broad limits. In addition, the application of foam offers great advantages in the process control, especially regarding the constancy of the solids content during the impregnating or coating of the textile surface and the required compatibility requirements of the surface manufacturing process on the binder.

The functional material used according to b) can be applied at the same time with the B-stage binder, e.g., as mixture or as individual components, or before or after the application of the binder. In as far as the B-stage binder is applied by foam application it is advantageous to apply the functional material with the foam or distributed in the foam or to apply the functional material onto the still fresh foam.

In addition to the previously cited features, the composite material in accordance with the invention can include even further finishings with a functional material. To this end, a functional material applied onto the top of the textile surface structure equipped with the B-stage binder or introduced into the textile surface structure is used.

The functional material in accordance with the invention is preferably flameproofing agents, materials for controlling electrostatic charges, organic or inorganic pigments, especially colored pigments, electrically conductive pigments or particles.

In a variant of the method an additional binder is added to fix the functional materials on the textile surface structure. The same binder (B-stage binder) as is present in the textile surface structure is preferably selected here. The content of functional materials is determined by the subsequent use.

The flameproofing agents are inorganic flameproofing agents, organophosphorus flameproofing agents, nitrogen-based flameproofing agents or intumescence flameproofing agents. Halogenated (brominated and chlorinated) flameproofing agents can also be used but are less preferred on account of their risk evaluation. Examples for such halogenated flameproofing agents are polybrominated diphenylether, e.g., decaBDE, tetrabromobisphenol A and HBCD (hexabromocyclododecane).

Antistatic effects can be achieved and/or the properties for the powder lacquering can be adjusted by the use of agents for raising and/or controlling the electrical conductivity. These agents are customarily particles that are electrically conductive. Suitable materials are electrically conductive carbons such as carbon black, graphite and carbon nanotubes (C nanotubes), conductive plastics of fibers or particles of metal or metallic components. In addition to these, conductive organic resins such as phenol resins, or inorganic or organic salts can also be used. Such additives are already known from DE-A-3639816. Furthermore, even the salts disclosed in DE-A-10232874 and EP-A-1659146, especially alkali salts or alkaline earth salts such as lithium nitrate and sodium nitrate can be used. However, the previously cited materials should be compatible with the other materials.

The use of agents for raising and/or controlling the electrical conductivity reduces the surface resistance of the composite material in accordance with the invention. It turned out that composite materials in accordance with the invention with a surface resistance of up to 10¹⁰ Ω (ohms), preferably up to 10⁸ Ω (ohms) are very well suited for powder lacquerings.

In a further embodiment the composite material in accordance with the invention can comprise even further additional layers and auxiliary layers that should facilitate or support a direct pressure. These additional layers and auxiliary layers are, e.g., base coatings and/or adhesion promoters and or layers of so-called adhesion bridges. Preferably, only base coatings are applied as pressure support in the form of one or more additional layers and auxiliary layers. These layers are only necessary as an aid. Due to the surface quality of the composite material in accordance with the invention, so-called primer layers can be entirely or at least partially eliminated. Furthermore, the layer thickness of the base coatings and therefore also the material expense can be reduced. Furthermore, expensive multilayer base coatings are avoided and the total expense reduced. A method for manufacturing the composite material in accordance with the invention comprises the measures:
a) supplying of a carrier,
b) application of a textile surface structure on at least one surface of the carrier, wherein the textile surface structure has at least one binder in the B-stage state and optionally at least one functional material is introduced,
c) lamination of the structure obtained according to step c) under the action of pressure and heat so that the binder present in the B stage receives its final hardening,
d) optional application of at least one additional layer and/or auxiliary layer(s) required for the direct printing or direct lacquering onto the side(s) of the composite material equipped with the textile surface structure.

The lamination of the construction obtained according to step b) takes place in step c) under the action of pressure and heat in such a manner that the binder present in the B stage receives its final hardening. The lamination can take place by discontinuous or continuous pressing or by rolling. The parameters of pressure, temperature and dwell time are selected in accordance with the B-stage binder used. On account of the surface quality, the surface of the presses or rollers should be selected in such a manner that the tolerances can be maintained.

In a variant the application of a textile surface structure can take place according to step b) even during the manufacture of the carrier. In other words, instead of the finished carrier in step a) the carrier is not formed until in step a).

The pressing of the formed carrier takes place together with the equipped textile surface structure, the textile surface structure being correspondingly introduced into the pressing and/or drying apparatus for the carrier. The manufacture of the carrier-non-woven fabric composite can take place continuously or discontinuously.

In a variant the textile surface structure applied in accordance with step b) can already comprise a finishing with functional material.

The layers applied according to step d) are additional layers and auxiliary layers that should simplify or support a direct pressure, e.g., base coatings and/or adhesion promoters or layers of so-called adhesion bridges. Preferably, only the base coating and/or adhesion promoter is applied as pressure support in the form of one or more additional layers and auxiliary layers. These layers are only necessary as an aid. Due to the surface quality of the composite material in accordance with the invention, so-called primer layers can be entirely or at least partially eliminated. Furthermore, the layer thickness of the base coatings and therefore also the material expense can be reduced. Furthermore, expensive multilayer base coatings are avoided and the total expense reduced.

The application of these additional layers and/or auxiliary layers in step d) and their drying takes place by known technologies.

Conditioned by the construction of the composite material in accordance with the invention, several special functions can be made available and utilized:
- Barrier layer between carrier and outer layer against H₂O and other solvents
- Electrical conductivity
- Adhesion promotion between carrier and base coating
- Reduction of the layer construction when used in the direct printing process
- Improvement of the impact strength (charpy impact)
- Avoidance of additional grinding processes.

The direct printing of wooden materials customarily requires a multilayer construction of the surface to be printed. Moreover, in addition to one or several primer layers (base coat), one or more base coatings are necessary on which the direct printing can then take place. A direct printing takes place here in one or even several individual printing steps. An outer lacquering completes the system. The multilayer construction is necessary in order to achieve an appropriate surface quality, and barrier layer properties in order to prevent diffusion processes and an improvement of the print qualities.

The use of the textile surfaces containing the B-stage binder in accordance with the invention produces an excellent surface quality. At the same time it is possible to produce the required barrier layer properties that thus make possible a simplified direct printing. The use of the textile surfaces in accordance with the invention thus permits the reduction of at least one primer layer and/or of at least one base coating layer or makes possible the complete replacement of these layers, in particular of the primer layer. A primer layer can preferably be completely eliminated by the textile surface in accordance with the invention. The number of the required base coating layers can also be optionally reduced.

When using conductive additives the textile surface in accordance with the invention can also be lacquered with the aid of a powder lacquering. Moreover, it is also possible to use electrostatic lacquering methods that are otherwise not possible without additional measures.

The impact strength can be drastically raised on account of the mechanical properties of the textile surface in accordance with the invention.

It is possible on account of the special nature of the laminated textile surfaces to reduce or entirely avoid necessary subsequent working of the surfaces. It is customarily necessary, in particular in the manufacturing of MDF, to remove the outer, soft layers damaged on account of the manufacturing method by means of a grinding process. This step can be omitted when using the textile surfaces in accordance with the invention or at least made less expensive.

Further subject matter of the present invention is a printed composite materials comprising a) a carrier, said carrier being selected from the group of wooden materials, papers, cork, cardboards and/or mineral plates,b) at least one textile surface structure applied on at least one of the two sides of the carrier, which textile surface structure has at least one finally hardened B-stage binder, said textile surface structure being a non-woven fabric, said textile surface being formed from fibers of synthesized polymers, ceramic fibers, mineral fibers or glass fibers, wherein these can also be used in the form of mixtures,c) optionally at least one functional material present in the carrier and/or in the textile surface,d) optionally one or more base coatings applied on the side of the textile surface structure facing away from the carrier,is directly printed on the textile surface structure which has not been subject to any mechanical working prior to the printing by inkjet, silk screen and/or digital printing and said printing is applied without primer layers being used on the textile surface or between the textile surface and the base coating optionally applied according to d). The concept "direct" denotes that the surface must not be subjected before the printing to any mechanical subsequent working, in particular not to any abrasive subsequent working. A finishing with primer layers or base coating layers is not excluded, preferably the composite materials in accordance with the invention are processed without a primer layer being applied. In as far as a finishing with primer layers (filler) is omitted, auxiliary layers, e.g., base coating layers and/or adhesion promoter layers or adhesion bridge layers can nevertheless be applied that bring about, among other things, a better adherence of the lacquering, coating with printed or lacquered foils or of the print on the surface.

The printing takes place by inkjet, silk screen and/or digital printing. The powder coating also takes place by known technologies. The drying of the printing layer or powder layer takes place as a function of the selected system.

The composite materials in accordance with the invention are used after surface finishing, e.g., after printing, lacquering or coating as construction material, in particular for furniture, wall coverings, ceiling coverings and floor coverings.

On account of the high surface quality the composite materials in accordance with the invention, optionally after finishing with a protective layer, can also be directly used as construction material, in particular for furniture, wall coverings, ceiling coverings and floor coverings. This is preferably the case if the carrier already has the desired decorative appearance.

The layers for the protection of the printed layer are usually lacquers such as powder lacquers, clear lacquers or transparent lacquers, preferably scratch-proof lacquers that protect against mechanical influences or against UV aging.

## Claims

1. The use of a composite material comprising:
a) a carrier, said carrier being selected from the group of wooden materials, papers, cork, cardboards and/or mineral plates,
b) at least one textile surface structure laminated on at least one of the two sides of the carrier, which textile surface structure having at least one finally hardened B-stage binder and can be optionally provided with at least one functional material, said textile surface structure being a non-woven fabric, said textile surface being formed from fibers of synthesized polymers, ceramic fibers, mineral fibers or glass fibers, wherein these can also be used in the form of mixtures,
c) the side(s) of the composite material equipped with the textile surface structure being not subjected to any mechanical working prior to the printing, for the direct printing of the side of the textile surface structure facing away from the carrier by inkjet, silk screen and/or digital printing.

2. The use according to claim 1, **characterized in that** the wooden materials are plate-shaped or strand-shaped wooden materials.

3. The use according to claim 2, **characterized in that** the wooden materials are plywood, laminated wood, wood-chip material, preferably chipboards and OSB (Oriented Strand Boards), wood fiber material, preferably porous wood fiber boards, open-diffusion wood fiber boards, hard (high-density) wood fiber boards (HDF) and medium-density wood fiber boards (MDF), and Arboform.

4. The use according to claim 1, **characterized in that** the carrier is materials of wood fiber materials, cellulose fibers, natural fibers or their mixtures and of a thermoplastic binder, that the amount of the binder being more than 15 % by weight.

5. The use according to claim 1, **characterized in that** the mineral plates are plates with cardboard coating on both sides, especially gypsum fiber plates, ceramic fiber plates, cement plates or lime plates that can optionally be reinforced with natural and/or synthetic fibers, wherein the latter can also comprise mineral and/or ceramic fibers.

6. The use according to claim 1, **characterized in that** the textile surface structure is a glass fiber non-woven fabric of filaments and/or of staple fibers.

7. The use according to claim 6, **characterized in that** the glass fiber non-woven fabric comprises glass microfibers whose average diameter is between 0.1 and 5 µm.

8. The use according to claim 6, **characterized in that** the glass fiber non-woven fabric has a weight per unit area of 15 to 500 g/m², wherein these data refer to a surface structure without binders.

9. The use according to claim 1, **characterized in that** the textile surface structure is a spunbonded non-woven fabric.

10. The use according to claim 1, **characterized in that** the B-stage binder is a binder based on furfuryl alcohol formaldehyde, phenol formaldehyde, melamine formaldehyde and their mixtures.

11. The use according to claim 1, **characterized in that** flameproofing agents, materials for controlling and/or elevating the electrostatic charges, organic or inorganic pigments, especially colored pigments, materials for controlling and/or elevating the electrical conductivity are used as functional material.

12. The use according to claim 1, **characterized in that** the composite comprises further additional layers and auxiliary layers on the side of the textile surface structure facing away from the carrier, preferably base coatings and/or adhesion promoter layers or layers of adhesion bridge materials.

13. The use according to claim 12, **characterized in that** no primer layers are applied onto the side of the textile surface structure to be worked.

14. The use according to claim 13, **characterized in that** the side of the textile surface structure to be worked does not have to be subjected to any abrasive working.

15. Printed composite materials comprising:
a) a carrier, said carrier being selected from the group of wooden materials, papers, cork, cardboards and/or mineral plates,
b) at least one textile surface structure applied onto at least one of the two sides of the carrier, which textile surface structure has at least one finally hardened B-stage binder, said textile surface structure being a non-woven fabric, said textile surface being formed from fibers of synthesized polymers, ceramic fibers, mineral fibers or glass fibers, wherein these can also be used in the form of mixtures,
c) optionally at least one functional material that is present in the carrier and/or the textile surface,
d) optionally one or more base coatings that are applied on the side of the textile surface structure facing away from the carrier,
e) at least one printed layer,
f) optionally further layers for the protection of the printed layer,
**characterized in that** the layer according to e) is applied directly on the textile surface structure which has not been subject to any mechanical working prior to the printing by inkjet, silk screen and/or digital printing and said layer according to e) is applied without primer layers being used between the layer according to e) and the textile surface or according to c) or the base coating applied on the textile surface structure according to d).

16. The printed composite materials according to claim 15, **characterized in that** the carrier material of the composite is defined in claims 2 to 5.

17. The printed composite materials according to claim 15, **characterized in that** the textile surface structure of the composite is defined in claims 6 to 9.

18. The printed composite materials according to claim 15, **characterized in that** the B-stage binder of the composite is defined in claim 10.

19. The printed composite materials according to claim 15, **characterized in that** no primer layers are applied onto the side of the textile surface structure to be printed.

20. The printed composite materials according to claim 15, **characterized in that** the side of the textile surface structure to printed has not been subjected to any abrasive working.

21. A method for manufacturing printed composite materials as claimed in claim 15, **characterized in that** a composite material comprising
a) a carrier, said carrier being selected from the group of wooden materials, papers, cork, cardboards and/or mineral plates,
b) at least one textile surface structure applied on at least one of the two sides of the carrier, which textile surface structure has at least one finally hardened B-stage binder, said textile surface structure being a non-woven fabric,
said textile surface being formed from fibers of synthesized polymers, ceramic fibers, mineral fibers or glass fibers, wherein these can also be used in the form of mixtures,
c) optionally at least one functional material present in the carrier and/or in the textile surface,
d) optionally one or more base coatings applied on the side of the textile surface structure facing away from the carrier,
is directly printed on the textile surface structure which has not been subject to any mechanical working prior to the printing by inkjet, silk screen and/or digital printing and said printing is applied without primer layers being used on the textile surface or between the textile surface and the base coating optionally applied according to d).

## Patentansprüche

1. Verwendung eines Verbundmaterials, aufweisend:
a) einen Träger, wobei der Träger aus der Gruppe von Holzmaterialien, Papieren, Kork, Pappen und/oder Mineralplatten ausgewählt ist,
b) mindestens eine Textiloberflächenstruktur, die auf mindestens einer der zwei Seiten des Trägers laminiert ist, wobei die Textiloberflächenstruktur mindestens einen endgehärteten B-Stufen-Binder aufweist und wahlweise mit mindestens einem Funktionsmaterial versehen sein kann, wobei die Textiloberflächenstruktur ein Vliesstoff ist, wobei die Textiloberfläche aus Fasern von synthetisierten Polymeren, Keramikfasern, Mineralfasern oder Glasfasern gebildet ist, wobei diese auch in der Form von Mischungen benutzt sein können,
c) wobei die Seite(n) des Verbundmaterials, die mit der Textiloberflächenstruktur ausgestattet ist (sind), vor dem Bedrucken keinerlei mechanischem Bearbeiten unterzogen wird (werden),
zum direkten Bedrucken der Seite der Textiloberflächenstruktur, die von dem Träger weg weist, mittels Tintenstrahl-, Sieb- und/oder Digitaldrucken.

2. Verwendung nach Anspruch 1, **dadurch gekennzeichnet, dass** die Holzmaterialien plattenförmige oder strangförmige Holzmaterialien sind.

3. Verwendung nach Anspruch 2, **dadurch gekennzeichnet, dass** die Holzmaterialien Sperrholz, Schichtholz, Hackschnitzelmaterial, vorzugsweise Spanplatten und OSB (Pressspanplatten, engl. Oriented Strand Boards), Holzfasermaterial, vorzugsweise poröse Holzfaserplatten, diffusionsoffene Holzfaserplatten, (hochdichte) Hartholzfaserplatten (HDF) und mitteldichte Holzfaserplatten (MDF) und Arboform sind.

4. Verwendung nach Anspruch 1, **dadurch gekennzeichnet, dass** der Träger aus den Materialien Holzfasermaterialien, Cellulosefasern, Naturfasern oder deren Mischungen und einem thermoplastischen Binder ist und dass die Menge des Binders mehr als 15 Gewichts-% beträgt.

5. Verwendung nach Anspruch 1, **dadurch gekennzeichnet, dass** die Mineralplatten Platten mit zweiseitiger Pappebeschichtung, insbesondere Gipsfaserplatten, Keramikfaserplatten, Zementplatten oder Kalkplatten sind, die wahlweise mit natürlichen und/oder synthetischen Fasern verstärkt sein können, wobei Letztere auch Mineral- und/oder Keramikfasern aufweisen können.

6. Verwendung nach Anspruch 1, **dadurch gekennzeichnet, dass** die Textiloberflächenstruktur ein Glasfaservlies aus Filamenten und/oder Stapelfasern ist.

7. Verwendung nach Anspruch 6, **dadurch gekennzeichnet, dass** das Glasfaservlies Glasmikrofasern aufweist, deren durchschnittlicher Durchmesser zwischen 0,1 und 5 µm beträgt.

8. Verwendung nach Anspruch 6, **dadurch gekennzeichnet, dass** das Glasfaservlies ein Gewicht je Flächeneinheit von 15 bis 500 g/m² aufweist, wobei sich diese Daten auf eine Oberflächenstruktur ohne Binder beziehen.

9. Verwendung nach Anspruch 1, **dadurch gekennzeichnet, dass** die Textiloberflächenstruktur ein Spinnvlies ist.

10. Verwendung nach Anspruch 1, **dadurch gekennzeichnet, dass** der B-Stufen-Binder ein Binder auf Basis von Furfurylalkoholformaldehyd, Phenylformaldehyd, Melaminformaldehyd und deren Mischungen ist.

11. Verwendung nach Anspruch 1, **dadurch gekennzeichnet, dass** Flammschutzmittel, Materialien zum Regulieren und/oder Erhöhen der elektrostatischen Ladungen, organische oder anorganische Pigmente, insbesondere farbige Pigmente, Materialien zum Regulieren und/oder Erhöhen der elektrischen Leitfähigkeit als Funktionsmaterial benutzt werden.

12. Verwendung nach Anspruch 1, **dadurch gekennzeichnet, dass** der Verbundstoff auf der Seite der Textiloberflächenstruktur, die von dem Träger weg weist, ferner zusätzliche Schichten und Hilfsschichten, vorzugsweise Grundierungen und/oder Haftvermittlerschichten oder Schichten von Haftbrückenmaterialien, aufweist.

13. Verwendung nach Anspruch 12, **dadurch gekennzeichnet, dass** auf der Seite der Textiloberflächenstruktur, die zu bearbeiten ist, keine Grundiermittelschichten aufgebracht sind.

14. Verwendung nach Anspruch 13, **dadurch gekennzeichnet, dass** die Seite der Textiloberflächenstruktur, die zu bearbeiten ist, keinem abrasivem Bearbeiten unterzogen werden zu braucht.

15. Bedruckte Verbundmaterialien, aufweisend:
a) einen Träger, wobei der Träger aus der Gruppe von Holzmaterialien, Papieren, Kork, Pappen und/oder Mineralplatten ausgewählt ist,
b) mindestens eine Textiloberflächenstruktur, die auf mindestens einer der zwei Seiten des Trägers aufgebracht ist, wobei die Textiloberflächenstruktur mindestens einen endgehärteten B-Stufen-Binder aufweist, wobei die Textiloberflächenstruktur ein Vliesstoff ist, wobei die Textiloberfläche aus Fasern von synthetisierten Polymeren, Keramikfasern, Mineralfasern oder Glasfasern gebildet ist, wobei diese auch in der Form von Mischungen benutzt sein können,
c) wahlweise mindestens ein Funktionsmaterial, das in dem Träger und/oder der Textiloberfläche vorhanden ist,
d) wahlweise eine oder mehrere Grundierungen, die auf der Seite der Textiloberflächenstruktur aufgebracht sind, die von dem Träger weg weist,
e) mindestens eine Druckschicht,
f) wahlweise ferner Schichten zum Schutz der Druckschicht,
**dadurch gekennzeichnet, dass** die Schicht gemäß e) direkt auf die Textiloberflächenstruktur aufgebracht ist, die vor dem Bedrucken mittels Tintenstrahl-, Sieb- und/oder Digitaldrucken keinerlei mechanischem Bearbeiten unterzogen wurde, und dass die Schicht gemäß e) aufgebracht ist, ohne dass zwischen der Schicht gemäß e) und der Textiloberfläche oder gemäß c) oder der Grundierung, die gemäß d) auf der Textiloberflächenstruktur aufgebracht sind, Grundiermittelschichten benutzt sind.

16. Bedruckte Verbundmaterialien nach Anspruch 15, **dadurch gekennzeichnet, dass** das Trägermaterial des Verbundstoffs in Anspruch 2 bis 5 definiert ist.

17. Bedruckte Verbundmaterialien nach Anspruch 15, **dadurch gekennzeichnet, dass** die Textiloberflächenstruktur des Verbundstoffs in Anspruch 6 bis 9 definiert ist.

18. Bedruckte Verbundmaterialien nach Anspruch 15, **dadurch gekennzeichnet, dass** der B-Stufen-Binder des Verbundstoffs in Anspruch 10 definiert ist.

19. Bedruckte Verbundmaterialien nach Anspruch 15, **dadurch gekennzeichnet, dass** auf der Seite der Textiloberflächenstruktur, die zu bedrucken ist, keine Grundiermittelschichten aufgebracht sind.

20. Bedruckte Verbundmaterialien nach Anspruch 15, **dadurch gekennzeichnet, dass** die Seite der Textiloberflächenstruktur, die zu bedrucken ist, keinerlei abrasivem Bearbeiten unterzogen wurde.

21. Verfahren zum Herstellen von bedruckten Verbundmaterialien nach Anspruch 15, **dadurch gekennzeichnet, dass** ein Verbundmaterial, aufweisend
a) einen Träger, wobei der Träger aus der Gruppe von Holzmaterialien, Papieren, Kork, Pappen und/oder Mineralplatten ausgewählt ist,
b) mindestens eine Textiloberflächenstruktur, die auf mindestens einer der zwei Seiten des Trägers aufgebracht ist, wobei die Textiloberflächenstruktur mindestens einen endgehärteten B-Stufen-Binder aufweist, wobei die Textiloberflächenstruktur ein Vliesstoff ist,
wobei die Textiloberfläche aus Fasern von synthetisierten Polymeren, Keramikfasern, Mineralfasern oder Glasfasern gebildet ist, wobei diese auch in der Form von Mischungen benutzt sein können,
c) wahlweise mindestens ein Funktionsmaterial, das in dem Träger und/oder in der Textiloberfläche vorhanden ist,
d) wahlweise eine oder mehrere Grundierungen, die auf der Seite der Textiloberflächenstruktur aufgebracht sind, die von dem Träger weg weist,
direkt auf die Textiloberflächenstruktur bedruckt wird, die vor dem Bedrucken mittels Tintenstrahl-, Sieb- und/oder Digitaldrucken keinerlei mechanischem Bearbeiten unterzogen wurde, und dass das Bedrucken angewandt wird, ohne dass auf der Textiloberfläche oder zwischen der Textiloberfläche und der Grundierung, die wahlweise gemäß d) aufgebracht wird, Grundiermittelschichten benutzt werden.

## Revendications

1. Utilisation d'un matériau composite comprenant:
(a) un support, ledit support étant choisi du groupe de matériaux en bois, papiers, liège, cartons et/ou plaques minérales,
(b) au moins une structure de surface textile stratifiée sur au moins l'un des deux côtés du support, laquelle structure de surface textile ayant au moins un liant au stade B finalement durci et peut être éventuellement pourvue avec au moins un matériau fonctionnel, ladite structure de surface textile étant un produit non tissé, ladite surface textile étant formée de fibres de polymères synthétisés, fibres céramiques, fibres minérales ou fibres de verre, où ceux-ci peuvent également être utilisées dans la forme de mélanges,
(c) le(s) côté(s) du matériau composite équipé avec la structure de surface textile étant non soumis à n'importe lequel travail mécanique avant de l'impression,
pour l'impression directe du côté de la structure de surface textile opposé au support par jet d'encre, sérigraphie, et/ou impression digitale.

2. Utilisation selon la revendication 1, **caractérisée en ce que** les matériaux en bois sont des matériaux en bois en forme de plaque ou en forme de copeaux.

3. Utilisation selon la revendication 2, **caractérisée en ce que** les matériaux en bois sont de placage, bois stratifié, matériau de copeaux de bois, préférablement les plaques à copeaux et OSB (Oriented Strand Boards-plaques à copeaux orientés), de matériau en fibres de bois, préférablement les plaques poreuses en fibres de bois, les plaques de fibres de bois à diffusion ouverte, les plaques en fibres de bois dures (HDF) (haute densité) et les plaques de fibres de bois de densité moyenne (MDF), et l'arboform.

4. Utilisation selon la revendication 1, **caractérisée en ce que** le support est de matériaux de fibres de bois, de fibres de cellulose, de fibres naturelles ou leur mélange et d'un liant thermoplastique, ainsi que la quantité de liant soit plus de 15% en poids.

5. Utilisation selon la revendication 1, **caractérisée en ce que** les plaques minérales sont des plaques avec revêtement de carton sur les deux côtés, notamment des plaques de fibres de gypse, plaques de fibres céramiques, plaques deciment ou plaques de chaux qui peuvent éventuellement être renforcées avec des fibres naturelles et/ou synthétiques, où les dernières peuvent aussi comprendre les fibres minérales et/ou céramiques.

6. Utilisation selon la revendication 1, **caractérisée en ce que** la structure de surface textile est un produit non tissé de fibres de verre de filaments et/ou de fibres discontinues.

7. Utilisation selon la revendication 6, **caractérisée en ce que** le produit non tissé de fibres de verre comprend des microfibres de verre dont le diamètre moyen est entre 0,1 et 5 µm.

8. Utilisation selon la revendication 6, **caractérisée** en ce quele produit non tissé de fibres de verre a un poids par l'unité de surface de 15 à 500g/m², où ces données se réfèrent à une structure de surface sans liants.

9. Utilisation selon la revendication 1, **caractérisée en ce que** la structure de surface textile est un produit non tissé filé.

10. Utilisation selon la revendication 1, **caractérisée** en ce quele liant au stade B est un liant basé sur l'alcool furfurylique formaldéhyde, phénol-formaldéhyde, mélamine formaldéhyde et leur mélanges.

11. Utilisation selon la revendication 1, **caractérisée en ce que** les agents ignifuges, les matériaux pour contrôler et/ou élever les charges électrostatiques, les pigments organiques ou inorganiques, notamment les pigments colorés, les matériaux pour contrôler et élever la conductivité électrique sont utilisés comme matériau fonctionnel.

12. Utilisation selon la revendication 1, **caractérisée en ce que** le composite comprend autres couches additionnelles et couches auxiliaires sur le côté de la structure de surface textile opposé au support, préférablement les revêtements de base et/ou les couches de promoteur d'adhésion ou les couches de matériaux de ponts d'adhésion.

13. Utilisation selon la revendication 12, **caractérisée en ce qu'**aucunecouche de fond n'est appliquée sur le côté de la structure de surface textile pour être travaillé.

14. Utilisation selon la revendication 13, **caractérisée en ce que** sur le côté de la structure de surface textile pour être travaillé ne doit pas être soumis à n'importe lequeltravail abrasif.

15. Matériaux composite imprimés comprenant:
(a) un support, ledit support étant choisi du groupe de matériaux en bois, papiers, liège, cartons et/ou plaques minérales,
(b) au moins une structure de surface textile appliquée sur au moins l'un des deux côtés du support, laquelle structure de surface textile présente au moins un liant au stade B finalement durci, ladite structure de surface textile étant un produit non tissé, ladite surface textile étant formée de fibres de polymères synthétisés, fibres céramiques, fibres minérales ou fibres de verre, où ceux-ci peuvent également être utilisées dans la forme de mélanges,
(c) éventuellement au moins un matériel fonctionnel qui est présent dans le support et/ou la surface textile.
(d) éventuellement au moins un ou plusieurs revêtements de base qui sont appliqués sur le côté de la structure de surface textile opposé au support,
(e) au moins une couche imprimée,
(f) éventuellement autres couches pour la protection de la couche imprimée,**caractérisé en ce que** la couche selon e) est appliquée directement sur la structure de surface textile qui n'a pas été soumise à n'importe lequel travail mécanique avant l'impression par jet d'encre, sérigraphie et/ou impression digitale et ladite couche selon e) est appliquée sansles couches de fond étant utilisées entre la couche selon e) et la surface textile ou selon c) ou le revêtement de base appliqué sur la structure de surface textile selon d).

16. Matériaux composite imprimés selon la revendication 15, **caractérisés en ce que** le matériau de support du composite est défini dans les revendications 2 à 5.

17. Matériaux composite imprimés selon la revendication 15, **caractérisés en ce que** la structure de surface textile du composite est défini dans les revendications 6 à 9.

18. Matériaux composite imprimés selon la revendication 15, **caractérisés en ce que** le liant au stade B du composite est défini dans la revendication 10.

19. Matériaux composite imprimés selon la revendication 15, **caractérisés en ce qu'**aucune couche de fond n'est appliquée sur le côté de la structure de surface textile pour être imprimée.

20. Matériaux composite imprimés selon la revendication 15, **caractérisés en ce que** le côté de la structure de surface textile à imprimer n'a pas été soumisà n'importe travail abrasif.

21. Procédé de fabrication de matériaux composite imprimés selon la revendication 15, **caractérisé en ce qu'**un matériau composite comprenant
(a) un support, ledit support étant choisi du groupe de matériaux en bois, papiers, liège, cartons et/ou plaques minérales,
(b) au moins une structure de surface textile appliquée sur au moins un des deux côtés du support, laquelle structure de surface textile a
au moins un liant au stade B finalement durci, ladite structure de surface textile étant un produit non tissé, ladite surface textile étant formée de fibres de polymères synthétisés, fibres céramiques, fibres minérales ou fibres de verre, où ceux-ci peuvent également être utilisées dans la forme de mélanges,
(c) éventuellement au moins un matériel fonctionnel présent dans le support et/ou dans la surface textile.
(d) éventuellement un ou plusieurs revêtements de base appliqués sur le côté de la structure de surface textile opposé au support, est directement imprimésur la structure de surface textile qui n'a pas été soumise à n'importre lequel travail mécanique avant de l'impression par jet d'encre, sérigraphie et/ou l'impression digitale et ladite impression est appliquée sansles couches de fond étant utilisées sur la surface textile ou entre la surface textile et le revêtement de base appliqué éventuellement selon d).
